# EUROPEAN PATENT SPECIFICATION

(11) **EP 4 342 957 B1**
(45) Date of publication and mention of the grant of the patent: **03.09.2025**
(21) Application number: 22828433.7
(22) Date of filing: 21.06.2022
(51) Int. Cl.: C09K 3/00, D21H 17/02, D21H 19/10, D21H 19/32, D21H 21/14, B65D 85/50, D06M 13/207, D06M 13/224, D06M 13/402

(54) **OIL-RESISTANT AGENT**
ÖLBESTÄNDIGES MITTEL
AGENT RÉSISTANT À L'HUILE

(30) Priority: 22.06.2021 JP 2021103440; 10.02.2022 JP 2022019806
(43) Date of publication of application: 27.03.2024
(73) Proprietor: DAIKIN INDUSTRIES, LTD., Osaka-Shi, Osaka 530-0001 (JP)
(72) Inventor: MATSUMOTO, Akane, Osaka-shi, Osaka 530-8323 (JP); AKUTA, Ryo, Osaka-shi, Osaka 530-8323 (JP); SHIOTANI, Yuko, Osaka-shi, Osaka 530-8323 (JP); IIDA, Mayumi, Osaka-shi, Osaka 530-8323 (JP); AIHARA, Marina, Osaka-shi, Osaka 530-8323 (JP); TOGO, Yukinori, Osaka-shi, Osaka 530-8323 (JP); SAKAMAKI, Tatsunori, Osaka-shi, Osaka 530-8323 (JP); HIGASHI, Masahiro, Osaka-shi, Osaka 530-8323 (JP); KISHIKAWA, Yosuke, Osaka-shi, Osaka 530-8323 (JP)
(74) Representative: Hoffmann Eitle
(86) International application number: PCT/JP2022/024780
(87) International publication number: WO 2022/270517

(56) References cited:
- WO-A1-92/12952
- JP-A- 2003 206 269
- JP-A- 2005 029 940
- JP-A- 2005 029 941
- JP-A- 2021 004 422
- JP-A- H0 959 602
- JP-A- H07 120 876
- JP-A- S58 134 143
- US-A- 2 353 762

## Description

### Technical Field

The present disclosure relates to an oil-resistant agent using a modified natural product obtained by modifying a biobased compound.

### Background Art

Paper containers are promising as an alternative to disposable plastic containers. Paper-made food packaging materials and food containers are required to prevent oozing-out of moisture and oil content of foods and oil-resistant agents are applied to papers by internal addition or external addition. From the viewpoint of the environmental consideration, the need for biobased materials is increasing.

(JP-A-9-286768 discloses a hydroxcarboxylic aid amide derivative having a polybasic hydroxycarboxylic acid as an acid component group.

JP-A-7-120876 discloses a support for photographic paper in which a photographic base paper is configured to contain a reaction product of an aliphatic oxyacid with a monohydric alcohol of a C₈₋₂₄-alkyl group or C₈₋₂₄-alkenyl, and/or an amine having, as substituents, a C₄₋₂₄-alkyl group or C₄₋₂₄-alkenyl group and a C₁₋₂₄-alkyl group, a C₃₋₂₄-alkenyl group or hydrogen.

US 2,353,762 discloses an oil-proof fibre container comprising a container body having a plurality of fibre layers held together with an adhesive, and an inner liner of sulfite paper impregnated with hydrogenated castor oil, said liner being secured to the inside body wall by a glue which has been dispersed in water with a sodium salt of a sulphonated dioctyl ester of a dibasic acid and with a liquid hydrocarbon.

JP-A-2005-029940 describes a surface treatment agent for paper, which comprises a base material of a modified ester starch that has been esterified and further appropriately hydroxyalkylated to have a viscosity of 0.01-4 Pa s at 50°C in a paste solution of a solid content concentration of 8%.

JP-A-2005-029941 relates to a greaseproof treated paper wherein an oil-resistant layer is provided on one or both sides of the paper substrate, the layer(s) including an undercoat film and a topcoat film having a low-viscosity decomposed starch or a hydroxylated hydrogen-substituted starch derivative capable of gelatinizing the decomposed starch as a coating film main component.

### Summary of Invention

### Technical Problem

An object of the present disclosure is to provide an oil-resistant agent which can impart the sufficient oil resistance by using a modified natural product in harmony with the environment.

### Solution to Problem

The present disclosure relates to a modified natural product in which a biobased compound is modified so as to have an organic modifying group. Examples of the organic modifying group are C₁₋₄₀-hydrocarbon groups and optionally having a substituent, or polysiloxanes.

The modified natural product can be used as the oil-resistant agent.

The present invention provides an agent (also referred to as "the present agent" herein), which is an oil-resistant agent, comprising a modified natural product (i) having a biobased content, measured according to ASTM D6866, of ≥ 30% and (ii) wherein
- a hydroxyl group of a carboxyl group of a biobased compound having at least one carboxyl group is replaced by -X-R¹ or -X-D-X'-R¹, or
- a carboxyl group of the biobased compound is replaced by 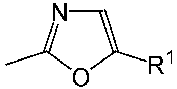 wherein
   - X: is a direct bond, -O-, -NR¹¹- or -S-;
   - R¹: is a C₁₂₋₄₀-hydrocarbon group optionally having a substituent selected from OH, carboxyl, alkoxy ester, alkoxy, amino, amine salts, and (Rc)₃Si and (RcO)₃Si wherein Rc each independently is H or C₁₋₄-alkyl;
   - D: is C₁₋₁₀-alkylene; and
   - X': is -C(=O)-O-, -O-C(=O)-, -C(=O)-NR¹²- or -NR¹²-C(=O)-, wherein R¹¹ and R¹² are each H or C₁₋₄₀-alkyl optionally having a substituent.

Also, the present invention provides the use of the present agent for paper.

Furthermore, the present invention provides an article comprising the present agent, the article being a textile product, an oil-resistant paper, a food packaging material or a food container.

Yet further, the present invention provides a method of treating paper, comprising subjecting the paper to an external addition treatment or an internal addition treatment using the present agent.

Preferred embodiments of the invention are as defined in the appended dependent claims and/or in the following detailed description.

### Advantageous Effects of Invention

The present agent excellent oil resistance. The present agent, which is of biobased origin, poses low load to the ecological environment.

### Description of Embodiments

The present agent imparts the oil resistance to a treatment target (substrate) by treating the treatment target with the present agent. The oil resistance includes e.g. a function of preventing oil stain into the treatment target, or functions of the oil repellency, or the antifouling property, but functions are not limited thereto.

Here, "oil" refers to fats and oils and organic solvents; the fats and oils include edible fats and oils (plant fatty oils, animal fatty oils, plant fats, animal fats) and industrial fats and oils; the edible fats and oils include salad oils, corn oils, sesame oils, rapeseed oils and olive oils, and industrial fats and oils include castor oils; organic solvents may be polar solvents or nonpolar solvents, and the nonpolar solvents include hexane and hexadecane, but are not limited thereto.

The treatment target may have water resistance and the water repellency. The oil-resistant agent may comprise, in addition to a modified natural product, a liquid medium (water, an organic solvent or a mixed solution thereof). The oil-resistant agent may further comprise at least one selected from surfactants, dispersants, blocked isocyanate compounds and additives.

The biobased compound is a compound having carbon of biobased origin. The biobased content is measured according to ASTM D6866. The compound having carbon of biobased origin has a biobased content of 30% or higher, preferably 50% or higher and most preferably 80% or higher or 90% or higher, for example, 100%. A high biobased content means that the amount of fossil resource-based materials represented by e.g. petroleum to be used is small; and in such a viewpoint, it can be said that the higher the biobased content of the biobased compound, the better.

The biobased compound may be a compound as it is a natural product, or a compound originated from a natural product. That is, the biobased compound includes derivatives of natural products.

The modified natural product is a compound having carbon of biobased origin. The biobased content is measured according to ASTM D6866. The biobased content is 30% or higher, preferably 50% or higher and most preferably 80% or higher or 90% or higher, for example, 100%. A high biobased content means that the amount of fossil resource-based materials represented by e.g. petroleum to be used is small; and in such a viewpoint, it can be said that the higher the biobased content of the modified natural product, the better.

The present disclosure provides an oil-resistant agent comprising a modified natural product (i) having a biobased content, measured according to ASTM D6866, of ≥ 30% and (ii) wherein
- a hydroxyl group of a carboxyl group of a biobased compound having at least one carboxyl group is replaced by -X-R¹ or -X-D-X'-R¹, or
- a carboxyl group of the biobased compound is replaced by 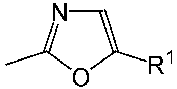 wherein
   - X: is a direct bond, -O-, -NR¹¹- or -S-;
   - R¹: is a C₁₂₋₄₀-hydrocarbon group optionally having a substituent selected from OH, carboxyl, alkoxy ester, alkoxy, amino, amine salts, and (Rc)₃Si and (RcO)₃Si wherein Rc each independently is H or C₁₋₄-alkyl;
   - D: is C₁₋₁₀-alkylene; and
   - X': is -C(=O)-O-, -O-C(=O)-, -C(=O)-NR¹²- or -NR¹²C(=O)-, wherein R¹¹ and R¹² are each H or C₁₋₄₀-alkyl optionally having a substituent.

Examples of the substituent include hydroxyl, carboxyl, alkoxy ester, alkoxy, (Rc)₃Si, (RcO)₃Si, amino and amine salts (Rc each independently is H or C₁₋₄-alkyl).

The carboxyl group of the modified natural product may have a structure of a salt. The corresponding cation is e.g. an ammonium ion, a quaternary ammonium ion, an alkali metal, or an alkaline earth metal.

The biobased compound may have functional groups other than the carboxyl group, and examples thereof include a hydroxyl group.

In the case where the biobased compound has a hydroxyl group, alternatively, hydrogen of the hydroxyl group may be replaced by -Y-R²¹ (Rb) wherein Y is a direct bond, - C(=O)-, -C(=O)-NR²²- or -C=S-, wherein R²² is H or C₁₋₄₀-alkyl optionally having a substituent, preferably H or methyl and more preferably H; and
R²¹ is a C₁₋₄₀-hydrocarbon group optionally having a substituent, or a polysiloxane.

Alternatively, the hydroxyl group of the modified natural product may have a structure of a salt. The corresponding cation is e.g. an ammonium ion, a quaternary ammonium ion, an alkali metal, or an alkaline earth metal.

In the modified natural product, alternatively, carboxyl groups or hydroxyl groups thereof may be crosslinked by a polyfunctional cross-linking agent.

Carboxyl groups of the modified natural product may be crosslinked by a polyfunctional cross-linking agent, and the modified natural product may have a structure in which the hydroxyl groups of carboxyl groups thereof are bonded by a bonding group Z. Z is preferably a bonding group represented by -O- or -NR³¹- (R³¹ is H or alkyl having 1-9 or 1-4 carbon atoms and optionally having a substituent, preferably H or methyl and more preferably H).

Hydroxyl groups of the modified natural product may be crosslinked by a polyfunctional cross-linking agent, and the modified natural product may have a structure in which the hydroxyl groups are bonded by a group having a bonding group Z'. Z' is preferably a bonding group represented by -C(=O)- or -C(=O)-NR⁴¹- (R⁴¹ is H or alkyl having 1-9 or 1-4 carbon atoms and optionally having a substituent, preferably H or methyl and more preferably H).

Examples of the polyfunctional cross-linking agent are diamines, putrescine, cadaverine, hexanemethylenediamine, phenylenediamine, ethylene glycol, propylene glycol, diethylene glycol, oxalic acid, malonic acid, succinic acid, glutaric acid, adipic acid, phthalic acid, isophthalic acid, terephthalic acid, citric acid, tolylene diisocyanate (TDI), diphenylmethane diisocyanate (MDI) and hexamethylene diisocyanate (HDI).

Examples of the -X-R¹ group are -R¹, -O-R¹, -NR¹¹-R¹ and - S-R¹, wherein R¹ and R¹¹ have the same meanings as in the above. Preferable are -O-R¹ and -NR¹¹-R¹; more preferable is -NR¹¹-R¹; still more preferable is -NH-R¹ for giving a larger contact angle.

Examples of the -X-D-X'-R¹ group are -O-D-O-C(=O)-R¹, -O-D-C(=O)-NR¹¹R¹, -O-D-NR¹²-C(=O)-R¹, -NR¹³-D-O-C(=O)-R¹, - NR¹³-D-C(=O)-NR¹¹R¹ and -NR¹³-D-NR¹²-C(=O)-R¹, wherein R¹ and R¹¹ and R¹² have the same meanings as in the above; R¹³ is H or C₁₋₄₀-alkyl optionally having a substituent; and D is C₁₋₁₀-alkylene and preferably C₁₋₄-alkylene. Preferable are -NR¹³-D-O-C(=O)-R¹, -NR¹³-D-C(=O)-O-R¹, -NR¹³-D-C(=O)-NR¹¹R¹ and -NR¹³-D-NR¹²-C(=O)-R¹; and more preferably are -NH-D-O-C(=O)-R¹, -NH-D-C(=O)-O-R¹, -NR¹³-D-C(=O)-NHR¹ and -NR¹³-D-NH-C(=O)-R¹.

When the biobased compound or the modified natural product has two or more carboxyl groups, the hydroxyl groups of the two carboxyl groups may be replaced by an Rd group and bonded. The Rd group is preferably a group of the formula:

-NR¹-

wherein R¹ has the same meaning as in the above.

The number of carbon atoms of R¹ is 12-40, and may be 14 or larger, 16 or larger, 18 or larger or 20 or larger. The number of carbon atoms of the hydrocarbon group may be 40 or smaller, 35 or smaller, 30 or smaller, 25 or smaller, 22 or smaller, 20 or smaller or 18 or smaller. The number is preferably 30 or smaller.

R¹ is a saturated or unsaturated C₁₂₋₄₀-hydrocarbon group optionally having a substituent selected from OH, carboxyl, alkoxy ester, alkoxy, amino, amine salts, and (Rc)₃Si and (RcO)₃Si wherein Rc each independently is H or C₁₋₄-alkyl, preferably an aliphatic hydrocarbon group optionally having a substituent and more preferably an aliphatic hydrocarbon group. The hydrocarbon group may be linear, branched or cyclic, and is preferably linear or branched, more preferably linear. R¹ may be, for example, a linear or branched alkyl group.

Specific examples of R¹ include alkyl groups such as lauryl, tridecyl, tetradecyl, pentadecyl, palmityl, heptadecyl, stearyl, behenyl, 2-ethylhexyl and isostearyl; alkenyl groups such as oleyl, palmitoyl and eicosenyl; and cycloalkyl groups.

R¹ may be a hydrocarbon group having an A group such as an amino group or an ammonium group.

The A is preferably a group of the formula -NA¹A² or -N⁺A¹A²A³B- (A¹, A² and A³ are each H or C₁₋₁₀-alkyl, preferably H or C₁₋₃-alkyl and most preferably H or methyl; and B⁻ is an ion such as a halide ion or an acetate ion).

R¹¹ and R¹² are each H or C₁₋₄₀-alkyl optionally having a substituent, preferably H or an aliphatic C₁₋₄₀-hydrocarbon, more preferably H or an aliphatic C₁₋₂₅-hydrocarbon, still more preferably H or an aliphatic C₁₋₁₀-hydrocarbon and most preferably H.

R¹³ is H or C₁₋₄₀-alkyl optionally having a substituent, preferably H or an aliphatic C₁₋₄₀-hydrocarbon, more preferably H or an aliphatic C₁₋₂₅-hydrocarbon, still more preferably H or an aliphatic C₁₋₁₀-hydrocarbon and most preferably H.

The modified natural product is preferably a compound in which at least one hydroxyl group of a carboxyl group(s) of a compound of the formula: 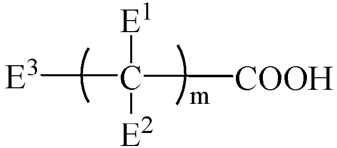
wherein E¹ are identical or different and each H or -COOH;
E² each independently is H or -OH;
E³ is -COOE⁴ (wherein E⁴ is H or C₁₋₂₂-alkyl), -CH₃, -NH₂ or -OH; and
m is a number of 0-10,
is replaced by an R group, or a compound in which a carboxyl group of the biobased compound is replaced by an Ra group.

In the case where E⁴ is alkyl, the number of carbon atoms of the alkyl group may be 1-4 or 1-10.

m may be 1-8, 2-6 or 3-5.

Examples of the modified natural product are as follows.

E₅-CH₂-COE₁₁

wherein E₅ is NHE₆, and E₆ is Boc, H or COE₁₂; and E₁₁ and E₁₂ are each R or OH, and at least one thereof is R.

E₇-CHE₈-CHE₉-COE₁₁

wherein E₇ is NHE₆, COE₁₂ or OCOR¹, preferably COE₁₂; E₈ and E₉ are each H, OH or OCOR¹, E₈ is preferably H and E₉ is preferably H or OAc; and E₆, E₁₁ and E₁₂ are as described above.

E₁₂-CO-CH₂-C(OH)E₁₀-CH₂-COE₁₁

wherein E₁₀ is COE₁₃ or H; and E₁₁, E₁₂ and E₁₃ are each R or OH and at least one thereof is R.

In the above examples, the R group is -X-R¹ or -X-D-X'-R¹, and X, R¹, D and X' are as described above.

In the above examples, Ac is acetyl, and Boc is t-butoxycarbonyl.

In the above examples, although cases of having an R group are shown, alternatively, - or the -CO-R group in every modified natural product in the above examples may be replaced by an Ra group.

In some embodiments, specific examples of the modified natural product are as follows. 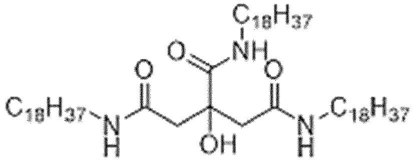 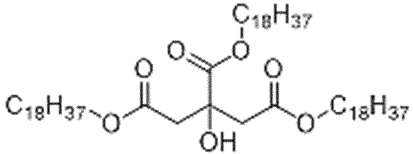 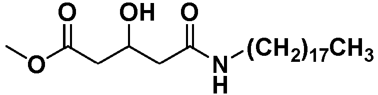 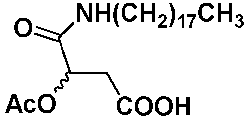 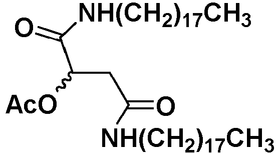 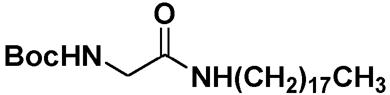
wherein Ac is acetyl; and
Boc is t-butoxycarbonyl.

The biobased compound is a compound having at least one carboxyl group (carboxyl group-containing natural product).

The biobased compound may also be a low molecular one (for example, the weight-average molecular weight is lower than 1,000 or 500 or lower) and/or a polymeric one. The weight-average molecular weight of the polymer may be 1,000 or higher, 3,000 or higher, 5,000 or higher, 10,000 or higher, 30,000 or higher, 100,000 or higher, 300,000 or higher or 500,000 or higher. The weight-average molecular weight of the polymer may be 7,500,000 or lower, 5,000,000 or lower, 3,000,000 or lower, 1,000,000 or lower, 750,000 or lower or 500,000 or lower, 300,000 or lower, 100,000 or lower, 75,000 or less or 50,000 or lower. The weight-average molecular weight can be measured in terms of pullulan by gel permeation chromatography (GPC).

The biobased compound may be a polymeric natural product, a low molecular natural product, or a derivative thereof.

The biobased compound (a natural product or a compound originated from a natural product) may be, for example, glycine, citric acid, malic acid, glutaric acid, gluconic acid, alginic acid, butyric acid, lactic acid, tartaric acid, oxalic acid, malonic acid, succinic acid, fumaric acid, maleic acid, chlorogenic acid, aldonic acid, uronic acid, aldaric acid, or a derivative thereof.

The biobased compound (a natural product or a compound originated from a natural product) is preferably a compound of the formula: 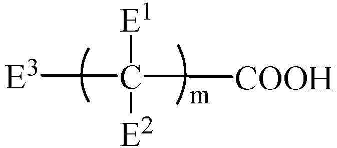
wherein E¹ are identical or different and each H or -COOH;
E² are identical or different and each H or -OH;
E³ is -COOE⁴ (wherein E⁴ is H or C₁₋₂₂-alkyl), -CH₃, -NH₂ or -OH; and
m is the number of 0-10.

In the case where E⁴ is alkyl, the number of carbon atoms of the alkyl group may be 1-4 or 1-10.

m may be 1-8, 2-6 or 3-5.

The modified natural product may have the biodegradability according to ASTM D5338. The biodegradability is preferably 5% or higher, more preferably 10% or higher, still more preferably 20% or higher or 30% or higher, further still more preferably 50% or higher, further still more preferably 80% or higher and most preferably 90% or higher. The higher the degradability, the lower the environmental load, and therefore it can be said that the higher the biodegradability of the modified natural product, the better.

The modified natural product can be produced by reacting a modifying agent with a carboxyl group of the biobased compound. Examples of synthesis methods of reacting the modifying agent with the carboxyl group include a method of forming an ester bond, a method of forming an amido bond and a method of forming an oxazole ring.

The modifying agent is preferably a compound having a hydrocarbon group and especially preferably a compound having an aliphatic hydrocarbon group. Examples of the modifying agent are as follows.

Alcohols (R¹-OH),

Amines (R¹-NR²H),

Isocyanates (R¹-N=C=O),

and

Isothiocyanates (R¹-N=C=S)

wherein R¹ has the same meaning as in the above (a C₁₋₄₀-hydrocarbon group optionally having a substituent); and R² is H or alkyl having 1-40 (for example, 1-10 or 1-4) carbon atoms and optionally having a substituent.

The ratio of substitution of the carboxyl group or the hydroxyl group of the carboxyl group by the modifying agent is preferably higher than 0 and more preferably 1% or higher, 3% or higher, 5% or higher or 10% or higher, for example, 15% or higher, 20% or higher, 30% or higher, 80% or higher or 95% or higher. The "ratio of substitution" means an average proportion (%) of the carboxyl group or the hydroxyl group of the carboxyl group present in the structure of the modified natural product substituted by the modifying agent.

The ratio of the carboxyl group unmodified (that is, the remaining ratio of the carboxyl group) is lower than 100%, and may be 95% or lower, 90% or lower, 60% or lower, 40% or lower or 20% or lower. The "remaining ratio" means a proportion (%) of the carboxyl group, present in the structure of the modified natural product, which has not been substituted by the modifying agent.

### <Method of forming an ester bond>

By using an alcohol (R¹-OH), an ester bond is formed with the carboxyl group of the biobased compound.

Examples of synthesis methods of converting a carboxyl group of a natural product to an ester bond include:
(a) a method of forming an ester bond by using a biobased compound, the alcohol (R¹-OH) and an acid catalyst;
(b) a method of forming an ester bond by using a biobased compound, the alcohol (R¹-OH) and a condensing agent; and
(c) a method of forming an ester bond by converting a biobased compound to an acyl compound and thereafter using the alcohol (R¹-OH),
(in each method, as required, a solvent is added). In the alcohol (R¹-OH), R¹ has the same meaning as in the above.

Specific examples of aliphatic alcohols include CH₃OH, CH₃CH₂OH, CH₃(CH₂)₂OH, CH₃(CH₂)₃OH, CH₃(CH₂)₄OH, CH₃(CH₂)₅OH, CH₃(CH₂)₆OH, CH₃(CH₂)₇OH, CH₃(CH₂)₈OH, CH₃(CH₂)₉OH, CH₃(CH₂)₁₀OH, CH₃(CH₂)₁₁OH, CH₃(CH₂)₁₂OH, CH₃(CH₂)₁₃OH, CH₃(CH₂)₁₄OH, CH₃(CH₂)₁₅OH, CH₃(CH₂)₁₆OH, CH₃(CH₂)₁₇OH, CH₃(CH₂)₁₈OH, CH₃(CH₂)₁₉OH, CH₃(CH₂)₂₀OH, CH₃(CH₂)₂₁OH, CH₃(CH₂)₂₂OH, CH₃(CH₂)₂₃OH, (CH₃)₂CHOH, (CH₃)₃COH, (CH₃)₂CHCH₂OH, (CH₃)₃CCH₂OH, (CH₃)₂CH(CH₂)₂OH, (CH₃)₃C(CH₂)₁₄OH, (CH₃)₂CH(CH₂)₁₅OH, (CH₃)₃C(CH₂)₁₈OH and (CH₃)₂CH(CH₂)₁₈OH.

### <Method of forming an amido bond>

An amido bond is formed by reacting a carboxyl group of a biobased compound. The amido bond is formed by reacting the biobased compound with an amine (R¹-NR²H), an isocyanate (R¹-N=C=O) or an isothiocyanate (R¹-N=C=S).

Synthesis methods of converting a carboxyl group of a biobased compound to an amido group include:
(a) a method of forming an amido bond by mixing a biobased compound with an amine (R¹-NR²H), an isocyanate (R¹-N=C=O) or an isothiocyanate (R¹-N=C=S);
(b) a method of forming an amido bond by using a biobased compound, and an amine (R¹-NR²H), an isocyanate (R¹-N=C=O) or an isothiocyanate (R¹-N=C=S), and a condensing agent;
(c) a method of forming an amido bond by using a biobased compound, and an amine (R¹-NR²H), an isocyanate (R¹-N=C=O) or an isothiocyanate (R¹-N=C=S), and a metal catalyst (for example, a tin catalyst); and
(d) a method of forming an amido bond by converting a biobased compound to an acyl compound, and thereafter adding an amine (R¹-NR²H), an isocyanate (R¹-N=C=O) or an isothiocyanate (R¹-N=C=S). In the amine (R¹-NR²H), the isocyanate (R¹-N=C=O) and the isothiocyanate (R¹-N=C=S), R¹ has the same meaning as in the above.

Specific examples of the amine include CH₃NH₂, CH₃CH₂NH₂, CH₃(CH₂)₂NH₂, CH₃(CH₂)₃NH₂, CH₃(CH₂)₄NH₂, CH₃(CH₂)₅NH₂, CH₃(CH₂)₆NH₂, CH₃(CH₂)₇NH₂, CH₃(CH₂)₈NH₂, CH₃(CH₂)₉NH₂, CH₃(CH₂)₁₀NH₂, CH₃(CH₂)₁₁NH₂, CH₃(CH₂)₁₂NH₂, CH₃(CH₂)₁₃NH₂, CH₃(CH₂)₁₄NH₂, CH₃(CH₂)₁₅NH₂, CH₃(CH₂)₁₆NH₂, CH₃(CH₂)₁₇NH₂, CH₃(CH₂)₁₈NH₂, CH₃(CH₂)₁₉NH₂, CH₃(CH₂)₂₀NH₂, CH₃(CH₂)₂₁NH₂, CH₃(CH₂)₂₂NH₂, CH₃(CH₂)₂₃NH₂, (CH₃)₂CHNH₂, (CH₃)₃CNH₂, (CH₃)₂CHCH₂NH₂, (CH₃)₃CCH₂NH₂, (CH₃)₂CH(CH₂)₂NH₂, (CH₃)₃C(CH₂)₁₄NH₂, (CH₃)₂CH(CH₂)₁₅NH₂, (CH₃)₃C(CH₂)₁₈NH₂ and (CH₃)₂CH(CH₂)₁₈NH₂

Specific examples of the isocyanate include CH₃NCO, CH₃CH₂NCO, CH₃(CH₂)₂NCO, CH₃(CH₂)₃NCO, CH₃(CH₂)₄NCO, CH₃(CH₂)₅NCO, CH₃(CH₂)₆NCO, CH₃(CH₂)₇NCO, CH₃(CH₂)₈NCO, CH₃(CH₂)₉NCO, CH₃(CH₂)₁₀NCO, CH₃(CH₂)₁₁NCO, CH₃(CH₂)₁₂NCO, CH₃(CH₂)₁₃NCO, CH₃(CH₂)₁₄NCO, CH₃(CH₂)₁₅NCO, CH₃(CH₂)₁₆NCO, CH₃(CH₂)₁₇NCO, CH₃(CH₂)₁₈NCO, CH₃(CH₂)₁₉NCO, CH₃(CH₂)₂0NCO, CH₃(CH₂)₂₁NCO, CH₃(CH₂)₂₂NCO, CH₃(CH₂)₂₃NCO, (CH₃)₂CHNCO, (CH₃)₃CNCO, (CH₃)₂CHCH₂NCO, (CH₃)₃CCH₂NCO, (CH₃)₂CH(CH₂)₂NCO, (CH₃)₃C(CH₂)₁₄NCO, (CH₃)₂CH(CH₂)₁₅NCO, (CH₃)₃C(CH₂)₁₈NCO and (CH₃)₂CH(CH₂)₁₈NCO.

Specific examples of the isothioisocyanate include CH₃NCS, CH₃CH₂NCS, CH₃(CH₂)₂NCS, CH₃(CH₂)₃NCS, CH₃(CH₂)₄NCS, CH₃(CH₂)₅NCS, CH₃(CH₂)₆NCS, CH₃(CH₂)₇NCS, CH₃(CH₂)₈NCS, CH₃(CH₂)₉NCS, CH₃(CH₂)₁₀NCS, CH₃(CH₂)₁₁NCS, CH₃(CH₂)₁₂NCO, CH₃(CH₂)₁₃NCO, CH₃(CH₂)₁₄NCO, CH₃(CH₂)₁₅NCO, CH₃(CH₂)₁₆NCS, CH₃(CH₂)₁₇NCS, CH₃(CH₂)₁₅NCS, CH₃(CH₂)₁₉NCS, CH₃(CH₂)₂₀NCS, CH₃(CH₂)₂₁NCS, CH₃(CH₂)₂₂NCS, CH₃(CH₂)₂₃NCS, (CH₃)₂CHNCS, (CH₃)₃CNCS, (CH₃)₂CHCH₂NCS, (CH₃)₃CCH₂NCS, (CH₃)₂CH(CH₂)₂NCS, (CH₃)₃C(CH₂)₁₄NCS, (CH₃)₂CH(CH₂)₁₅NCS, (CH₃)₃C(CH₂)₁₈NCS and (CH₃)₂CH(CH₂)₁₈NCS.

R²¹ is preferably an aliphatic C₁₋₄₀-hydrocarbon group optionally having a substituent. The number of carbon atoms is preferably 4 or larger, more preferably 6 or larger and still more preferably 8 or larger, and preferably 35 or smaller, more preferably 30 or smaller and still more preferably 25 or smaller.

In the present disclosure, preferable is the modified natural product modified with a primary amine.

### <Oil-resistant agent>

Since the modified natural product has an oil resistance, it can be used as the "oil-resistant agent". The oil-resistant agent may be a composition configured by comprising the modified natural product, or may be composed only of the modified natural product. The oil-resistant agent may further have the water resistance, the water repellency and the oil repellency. The oil-resistant agent may contain, in addition to the modified natural product, a liquid medium (water, an organic solvent or a mixed solution thereof). The oil-resistant agent may further contain at least one selected from surfactants, dispersants, cross-linking agents such as blocked isocyanate compounds, and additives.

The amount of the modified natural product may be, with respect to the oil-resistant agent, 0.01 wt.% or larger, 0.1 wt.% or larger, 1 wt.% or larger, 10 wt.% or larger, 20 wt.% or larger or 30 wt.% or larger. The amount of the modified natural product may be, with respect to the oil-resistant agent, 100 wt.% or smaller, 95 wt.% or smaller, 90 wt.% or smaller or 80 wt.% or smaller.

The oil-resistant agent may contain a liquid medium. The liquid medium is singly water, singly an organic solvent, or a mixed solution of water and an organic solvent, and is preferably singly water.

The amount of the liquid medium may be, with respect to the oil-resistant agent, 60 wt.% or larger, 80 wt.% or larger or 90 wt.% or larger, and the amount of the liquid medium may be smaller than 100 wt.%, 99 wt.% or smaller, 95 wt.% or smaller, 90 wt.% or smaller or 80 wt.% or smaller.

### <Surfactant or dispersant>

The oil-resistant agent does not necessarily contain a surfactant (emulsifier) or a dispersant, or may contain.

During the reaction time or after the reaction, a small amount (for example, with respect to 100 parts by mass (pbm) of the modified natural product, 0.01-100 pbm or 0.01-50 pbm, for example, 0.1-30 pbm) of the surfactant or the dispersant may be added. When a surfactant or a dispersant is added, the stability of a water dispersion is usually improved.

It is preferable that the surfactant contain one or more kinds of surfactants selected from cationic surfactants, nonionic surfactants, anionic surfactants and amphoteric surfactants; and it is more preferable to use a nonionic surfactant, a cationic surfactant or a combination of a nonionic surfactant and a cationic surfactant.

The surfactant may be a combination of each one kind or each two or more kinds of nonionic surfactants, cationic surfactants, anionic surfactants and amphoteric surfactants.

The surfactant or the dispersant may be added in an amount of, with respect to 100 pbm of the modified natural product, 0.01 wt.% or larger, 0.1 wt.% or larger, 1 wt.% or larger, 5 wt.% or larger, 10 wt.% or larger, 30 wt.% or larger or 50 wt.% or larger, and then, 100 wt.% or smaller, 95 wt.% or smaller, 90 wt.% or smaller or 70 wt.% or smaller. The addition of the surfactant or the dispersant usually improves the stability of a water dispersion.

Examples of the nonionic surfactant (emulsifier) or dispersant include glycerol fatty acid esters, sorbitan fatty acid esters, sucrose fatty acid esters, polyoxyethylene alkyl ethers, polyoxyethylene alkyl phenyl ethers, polyoxyethylene polyoxypropylene alkyl ethers, polyoxyethylene polyoxybutylene alkyl ethers, polyoxyethylene polyoxypropylene glycols, fatty acid polyethylene glycols, fatty acid polyoxyethylene sorbitan, fatty acid alkanolamides and polyethyleneimine ethoxylates.

Examples of the cationic surfactant (emulsifier) or dispersant include alkylamine salts and quaternary ammonium salts; the alkylamine salts include monoalkylamine salts, dialkylamine salts and trialkylamine salts, and the quaternary ammonium salts include a trimethylammonium chloride salt, dialkyldimethylammonium chloride salts and alkyl benzalkonium chloride salts.

Examples of the anionic surfactant (emulsifier) or dispersant include carboxylate salts, sulfonate salts, sulfate ester salts and phosphate ester salts; and examples of the carboxylate salts include aliphatic monocarboxylate salts and alkyl ether carboxylate salts; examples of the sulfonate salts include dialkylsulfosuccinate salts, alkanesulfonate salts, alkylbenzenesulfonate salts and alkylnaphthalenesulfonate salts; examples of the sulfate ester salts include alkylsulfate salts and fat-and-oil sulfate ester salts; and examples of the phosphate ester salts include alkylphosphate salts and polyoxyethylene alkyl ether phosphate salts.

Examples of the amphoteric surfactant (emulsifier) or dispersant include alkyl betaines, fatty acid amide propyl betaines, 2-alkyl-N-carboxymethyl-N-hydroxyethylimidazolium salts, alkyl diethylene triaminoacetatic acids, dialkyl diethylene triaminoacetatic acids and alkylamine oxides.

When the surfactant (emulsifier) or the dispersant is added during or after the reaction of the modified natural product, heating may be carried out. After the dispersant is added to the modified natural product, they may be heated and melted and then dispersed; or they may be dispersed or dissolved by adding a solution (preferably, water) under further heating. The heating temperature may be 40°C or higher, 60°C or higher or 80°C or higher.

The oil-resistant agent does not necessarily contain a blocked isocyanate compound, or may contain. The blocked isocyanate compound may be added before the substitution reaction of the carboxyl group, or may be added after the reaction (for example, before a curing process).

Preferable blocked isocyanate compounds are blocked isocyanates such as oxime blocked toluene diisocyanate, blocked hexamethylene diisocyanate and blocked diphenylmethane diisocyanate.

The amount of the blocked isocyanate compound may be, with respect to 100 pbw of the modified natural product, 15 pbw or smaller, 10 pbw or smaller, 7.5 pbw or smaller, 5 pbw or smaller or 2.5 pbw or smaller.

The oil-resistant agent may contain additives. Examples of the additives are binder resins, dispersants, water-resistant agents, oil-resistant agents, water repellents, oil repellents, drying rate adjusters, cross-linking agents, film forming assistants, compatibilizers, antifreezing agents, viscosity adjusters, ultraviolet absorbents, antioxidants, pH adjusters, antifoaming agents, texture modifiers, slippage modifiers, antistatic agents, hydrophilizing agents, antibacterial agents, antiseptic agents, insect repellents, fragrant agents, flame retarders, retention aids, sizing agents, paper strength additives and fillers.

Examples of the retention aids include aluminum sulfate, acrylic polymers, starch, modified starch, cellulose, modified cellulose and silica.

Examples of the sizing agents include rosin-based sizing agents, alkyl ketene dimers (AKD), alkenyl succinic anhydrides (ASA), polyvinyl alcohols (PVA), modified starch, styrene·acrylic copolymers and styrene·methacrylic copolymers.

Examples of the pH adjusters include lactic acid, carbon dioxide, succinic acid, gluconic acid, citric acid, trisodium citrate, phosphoric acid, potassium carbonate and sodium hydrogencarbonate.

Examples of the fillers include talc, kaolin, calcium carbonate, titanium oxide and barium sulfate.

Examples of the paper strength additives include urea formaldehyde resins, melamine formaldehyde resins, polyamide polyamine epichlorohydrins (PAE), polyvinylamines (PVAm), modified starch, polyacrylamides and polyvinyl alcohols.

The amount of the additives is, with respect to 100 pbw of the modified natural product, larger than 0 and preferably 0.1 pbw or larger and more preferably 1 pbw or larger, and 100 pbw or smaller, more preferably 80 pbw or smaller and still more preferably 50 pbw or smaller.

### <Properties of the oil-resistant agent and the modified natural product>

The melting point of functional groups (side chains) of the modified natural product, preferably, is 0°C or higher or exhibits no melting point, and is preferably 20°C or higher, 40°C or higher or 60°C or higher. Then, the melting point of the functional groups (side chains) is preferably 180°C or lower, 140°C or lower or 120°C or lower. With the melting point of the functional groups (side chains) in the above range, the resistance to temperature is improved and in particular, from the viewpoint of high-temperature oil resistance, the melting point being in the above range is preferable. Here, the functional groups (side chains) in the modified natural product are intended to be the R groups, particularly C₁₋₄₀-hydrocarbon groups, of the modified natural product. The melting point of the functional groups (side chains) in the modified natural product is a temperature at which when a solid of the modified natural product is heated from a low temperature, the arrangement of the R groups of the modified natural product is distorted, and may be the glass transition temperature of the modified natural product.

The contact angle of n-hexadecane against the oil-resistant agent (on a glass substrate) may be 5° or larger, 10° or larger or 15° or larger, preferably 20° or larger or 25° or larger, more preferably 30° or larger and most preferably 35° or larger or 40° or larger. With the contact angle of n-hexadecane in the above range, the oil-resistant agent is excellent in the liquid repellency, and in particular, from the viewpoint of the oil resistance, the contact angle being in the above range is preferable.

The melting point of the modified natural product is preferably 20°C or higher, more preferably 40°C or higher, still more preferably 60°C or higher and most preferably 80°C or higher. Then, the melting point of the oil-resistant agent is preferably 200°C or lower, 180°C or lower or 160°C or lower.

With the melting point of the oil-resistant agent in the above range, the coatability when the oil-resistant agent is applied to a texture product, and the resistance to temperature are improved and in particular, from the viewpoint of the high-temperature oil resistance, the melting point being in the above range is preferable.

The glass transition temperature of the modified natural product, preferably, is 0°C or higher or exhibits no glass transition temperature, more preferably, is 20°C or higher or exhibits no glass transition temperature, still more preferably, is 40°C or higher or exhibits no glass transition temperature, and most preferably, is 60°C or higher or exhibits no glass transition temperature. Then, the glass transition temperature of the oil-resistant agent is preferably 180°C or lower, 140°C or lower or 120°° or lower. With the glass transition temperature of the oil-resistant agent in the above range, the coatability when the oil-resistant agent is applied to a texture product, and the resistance to temperature are improved and in particular, from the viewpoint of the oil resistance, the glass transition temperature being in the above range is preferable.

The viscosity of the oil-resistant agent (solution or dispersion) in a concentration of the modified natural product of 14.8 mg/mL is preferably 3 cP or higher, 5 cP or higher, 7 cP or higher or 10 cP or higher. Then, the viscosity of the oil-resistant agent (a solution or a dispersion) in a concentration of the modified natural product of 14.8 mg/mL is preferably 1,000cP or lower, 500 cP or lower or 100 cP or lower. With the viscosity of the solution (dispersion) in the above range, the coatability when the oil-resistant agent is applied to a texture product is improved and in particular, from the viewpoint of the oil resistance, the viscosity being in the above range is preferable.

The air permeability of a treated paper, which is fabricated by three times carrying out an operation in which the oil-resistant agent (a solution or a dispersion) in a concentration of the modified natural product of 14.8 mg/mL is coated by a Baker applicator set at 0 mil on a base paper of a paper of 0.58 g/cm3 in paper density and 45 g/m2 in basis weight, and dried, and annealing the resultant at a temperature of 70°C to 100°C for 10 min, is preferably 10,000 s/100 cc or lower, more preferably 5,000 s/100 cc or lower, still more preferably 3,000 s/100 cc or lower and most preferably 1,000 s/100 cc or lower.

A preferable range (hexadecane contact angle × melting point) of combinations of the contact angle of hexadecane against the oil-resistant agent and the melting point of the oil-resistant agent may be 5° or larger × 0°C or higher, 10° or larger × 20°C or higher, 20° or larger × 40°C or higher or 30° or larger × 60°C or higher.

### <Applications of the oil-resistant agent>

The oil-resistant agent can be used as various types of agents, such as a water-resistant agent, a water repellent, an oil repellent, a soil resistant agent, a soil release agent, a release agent and a mold release agent, and also as a component of these.

The oil-resistant agent can be used as a treatment agent such as an external treatment agent (surface-treating agent) or an internal treatment agent, or as a component thereof.

By treating a substrate with the oil-resistant agent, the modified natural product can form a surface coating structure on the substrate surface.

The surface coating structure can be formed by applying the oil-resistant agent to a treatment target (substrate) by a conventionally well-known method to adhere the oil-resistant agent on the substrate surface. A method is usually adopted in which the modified natural product is dispersed in and diluted with an organic solvent or water, and the resultant is made to adhere on the surface of the treatment target by a well-known method such as dip coating, spray coating or foam coating, and dried. Then, as required, the modified natural product may be applied together with a suitable cross-linking agent (for example, a blocked isocyanate compound) and then cured. Further, it is also possible to add and concurrently use an insect repellent, a softening agent, an antibacterial agent, a flame retarder, an antistatic agent, a coating material fixing agent, a wrinkle-resistant agent, a sizing agent, and a paper strength additive.

Treatment targets to be treated with the oil-resistant agent include textile products, stone, filters (for example, electrostatic filters), dust-free masks, parts (for example, gas diffusion electrodes and gas diffusion supports) of fuel cells, glass, wood, leather, fur, asbestos, bricks, cement, metals and oxides, ceramic products, plastics, painted surfaces and plaster.

As the textile products, various types thereof can be cited, but examples thereof include fabric products and paper products.

Examples of the fabric products include animal and plant natural fibers such as cotton, hemp, wool, and silk, synthetic fibers such as polyamide, polyester, polyvinyl alcohol, polyacrylonitrile, polyvinyl chloride and polypropylene, semisynthetic fibers such as rayon and acetate fibers, inorganic fibers such as glass fibers, carbon fibers and asbestos fibers, and mixed fibers thereof. The fabric products include woven fabrics, knitted fabrics and nonwoven fabrics, and fabrics in clothing forms and carpets; and some treatment may be carried out on fibers, threads and intermediate textile products (for example, slivers or slubbings) in the state before being made into the fabrics.

Examples of the paper products include papers composed of bleached or unbleached chemical pulps, such as kraft pulp and sulfite pulp, bleached or unbleached high yield pulps, such as groundwood pulp, mechanical pulp and thermomechanical pulp, and papers composed of waste paper pulps such as news, magazine waste papers, corrugated fiberboard waste pulps or deinked waste papers, containers composed of papers, and formed articles composed of papers. Specific examples of the paper products are wrapping papers for food, gypsum liner boards, base coated papers, mechanical papers, general use liners and corrugating media, neutral pure white machine glazed papers, neutral liners, rust-preventive liners and metal-laminated papers, kraft papers, neutral printing writing papers, neutral base coated papers, neutral PPC papers, neutral thermosensitive papers, neutral pressure sensitive papers, neutral inkjet papers and neutral specialty papers for communication, and mold papers (mold containers). The modified natural product of the present disclosure is excellent in the oil resistance (for example, high-temperature oil resistance), and hence is suitably used in applications requiring the oil resistance, particularly for food packaging materials and food containers.

The oil-resistant agent can be applied to fibrous substrates (for example, textile products, and textile raw materials such as pulps) by any of methods known for treating textile products with a liquid. The fibrous substrate means both of a textile product and a textile raw material. When the textile product is a fabric, the fabric may be dipped in a solution (or a dispersion), or a solution (or a dispersion) may be adhered or sprayed on the fabric. The treatment may be an external addition treatment or an internal addition treatment. When the textile product is a paper, a solution (or a dispersion) may be coated on the paper, or a solution (or a dispersion) may be adhered or sprayed on the paper, or alternatively, a solution (or a dispersion) may be mixed with a pulp slurry before papermaking for the treatment. The treatment may be an external addition treatment or an internal addition treatment.

The oil-resistant agent may be applied to textile products (particularly, papers and fabrics) previously formed, or may also be applied at various stages of papermaking, for example, during the paper drying period.

For example, the fibrous substrate may be a leather. In order to render the leather hydrophobic and oleophobic, the oil-resistant agent may be applied as an aqueous solution or an aqueous emulsion to the leather at various stages in the leather processing period, for example, during a wet processing of the leather, or during the leather finishing period.

The oil-resistant agent can be used also be as an external mold release agent. For example, the surface of a substrate can easily be peeled off from another surface (the other surface of the substrate, or the surface of another substrate).

### <Treatment>

The "treatment" means applying the oil-resistant agent to a treatment target by e.g. dipping, spraying, or coating. By the treatment, the modified natural product being an active component of the oil-resistant agent penetrates into the inside of the treatment target and/or adheres on the surface of the treatment target.

In order to develop the oil resistance, the treatment target (substrate) treated is dried, preferably heated, for example, at a temperature of not lower than the glass transition temperature (Tg) of the modified natural product, for example, 40°C or higher, 60°C or higher or 80°C or higher, or at a temperature of 250°C or lower or 200°C or lower. By the treatment at a temperature of not lower than Tg of the modified natural product, the arrangement of side chains is induced in some cases. The treatment temperature is more preferably a temperature of the melting point (Tm) or higher. By the treatment at a temperature of not lower than Tm of the modified natural product, the substrate surface is coated with the modified natural product. Thereby, a surface coating structure excellent in hydrophobicity can be formed.

In the case of the treatment with the oil-resistant agent in a liquid state, in order to enhance the desolventizing (dehydrating) property or the adhesion between the modified natural product and the substrate, the fibrous substrate treated may be pressurized, and the treatment is carried out at a pressure of 0.1 MPa or higher, preferably 0.15 MPa or higher and more preferably 0.2 MPa or higher.

### <Additive for paper>

The oil-resistant agent can suitably be used particularly for an additive for paper. The additive for paper containing the oil-resistant agent can be used, in addition to an oil-resistant agent, as a water-resistant agent, a water repellent, and/or an oil repellent. It is preferable that the additive for paper be in a form of solution, emulsion or aerosol. The additive for paper may contain the modified natural product and a medium (for example, a liquid medium such as an organic medium or water), and is preferably a water dispersion of the modified natural product. In the additive for paper, the concentration of the modified natural product may be, for example, 0.01-50 wt.%. The additive for paper may not contain a surfactant.

The removal of the solution (organic solvent, water) contained in the additive for paper can be carried out by heating the modified natural product solution (dispersion) at a temperature of 40°C or higher, 60°C or higher or 80°C or higher, and a temperature of 250°C or lower or 200°C or lower.

The additive for paper can be used to treat (for example, surface treatment) a paper base. The additive for paper can be applied to a treatment target by a conventionally well-known method. Usually, a method (surface treatment) is adopted in which the additive for paper is dispersed in and diluted with an organic solvent or water, and adhered on the surface of a treatment target by a well-known method such as dip coating, spray coating or foam coating, and dried. Paper bases of the treatment target include papers, containers composed of a paper, formed articles composed of a paper (for example, pulp mold). The modified natural product of the present disclosure adheres well on paper bases. Here, "adhere" refers to the formation of a physical bond or a chemical bond. By making the modified natural product to adhere on paper bases, oil-resistant papers are obtained.

Hitherto, embodiments have been described, but it is to be understood that modes and details may be modified and changed variously without departing from the gist and the scope of the claims.

### Examples

Then, the present disclosure will be described specifically by way of Examples. However, the present disclosure is not any more limited to these descriptions. Hereinafter, parts, % and ratio denote, unless otherwise specified, parts by weight (pbw), wt.% and weight ratio.

Test methods used in the below were as follows.

### Fabrication of a treated paper

A pulp slurry was prepared which, as a wood pulp, had weight ratios of LBKP (broad-leaved tree bleached kraft pulp) and NBKP (needle-leaved tree bleached kraft pulp) of 60 wt.% and 40 wt.%, and a freeness of 400 ml of the pulp (Canadian Standard Freeness); a wet paper strength agent and a sizing agent were added to the pulp slurry and a paper of 0.58 g/cm³ in paper density and 45 g/m² in basis weight was fabricated by a Fourdrinier paper machine; and the paper was used as a base paper for external addition treatment (size press treatment). The oil resistance (KIT value) of the base paper was 0; and the water resistance (Cobb value) was 52 g/m².

As an emulsifier and a dispersant, used was a polyoxyethylene alkyl ether, a polyoxyethylene polyoxypropylene alkyl ether, a polyoxyethylene polyoxybutylene alkyl ether, a polyoxyethylene polyoxypropylene glycol, an alkylamine salt, a quaternary ammonium salt, a carboxylate salt, a polyethyleneimine ethoxylate or an analogous compound thereof.

In the case of fabricating a modified natural product solution (or dispersion) by using an organic solvent, an operation was three times repeated in which the modified natural product solution (or dispersion) (used chloroform, toluene or acetone as its solvent) of 14.9 mg/cm³ was coated on the base paper by a Baker applicator set at a gap of 0 mil, and dried, and then, the resultant was annealed at 70°C for 10 min, to fabricate a treated paper.

In the case of fabricating a modified natural product solution (or dispersion) by using water, an operation was three times repeated in which the modified natural product solution (or dispersion) of 1 wt.% was coated on the base paper by a Baker applicator set at a gap of 0 mil, and dried, and then, the resultant was annealed at 100°C for 10 min, to fabricate a treated paper.

### KIT test (oil resistance)

The oil resistance was measured by a 3M Kit Test (TAPPI T-559 cm-02). The 3M Kit Test method involved placing a test oil containing castor oil, toluene and heptane blended therein on a surface of the treated paper, and after 15 s, wiping out the test oil and then, evaluating the oil resistance by checking the presence/absence of oil stain into the treated paper. The test was carried out by using test oils of kit Nos. 1 to **6,** and the maximum kit number of the oil exhibited no staining was used as an evaluation result of the oil resistance.

Evaluation of the corn oil resistance (oil resistance)
a corn oil was placed on a surface of the treated paper, and after 15 s, wiped out and then, the oil resistance was evaluated by checking the presence/absence of oil stain into the treated paper. The case where no stain was observed was taken as "Good"; and the case where stain was observed was taken as "Poor".

### Liquid repellency (static contact angle)

The liquid repellency was evaluated by spin coating a solution (or dispersion) of 1.0% in solid content concentration of the modified natural product on a glass substrate having a cellophane film pasted thereon, and measuring the static contact angle. The static contact angle was obtained by dropping 2 µL of hexadecane (HD) on the resultant coating film, and measuring the contact angle at 1 s after the liquid dropping.

### Air permeability

The air permeability (air resistance) of the treated paper was measured by using an automatic Gurley densometer (product No. 323-AUTO, vent diameter: 28.6 ±0.1 mm), manufactured by Yasuda Seiki Seisakusho, Ltd., according to JIS P8117 (2009).

### Melting point

The melting point was measured by using a differential scanning calorimeter. A temperature exhibiting the highest endothermic peak was taken as a melting point of the modified natural product; and a temperature exhibiting the second highest endothermic peak was taken as a melting point of functional groups (side chains) in the modified natural product.

### Fabrication of a mold

A mold was molded by using an automatic mold molding machine. In the lower section, a metal-made pulp mold forming mold provided with a large number of suction holes and having a network body disposed thereon was arranged; and in the upper section, a metal-made tank was arranged; and a pulp slurry was put in the upper-section metal tank. The pulp-containing aqueous composition was suctioned and dehydrated from the opposite side to the side of the pulp mold forming mold where the network body was disposed through the pulp mold forming mold and the network body, at 0.1-1 MPa by a vacuum pump, to cause a solid content (e.g. pulp) contained in the pulp-containing aqueous composition to deposit on the network body to obtain a pulp mold intermediate. Then, the obtained pulp mold intermediate was dried under a pressure of 0.1-1 MPa from the upside and downside in metal-made female and male molds heated at 60-200°C. Thereby, a pulp mold product formed into a container shape was produced.

### Practical oil resistance test

100 ml of a corn oil at 65°C was poured in the mold, and allowed to stand at room temperature for 45 min; and thereafter, the degree of oil stain on the mold was evaluated. According to the degree of penetration, the evaluation numerical values were set as follows.
5: There was no stain on the inside.
4: There was stain on the inside. There was no stain on the back side.
3: There was stain on the inside. There was slight oozing-out to the back side.
2: There was stain on the inside. Oozing-out to the back occurred in smaller than 50% of the area.
1: There was stain on the inside. Oozing-out to the back occurred in 50% or larger and smaller than 100% of the area.
0: Oozing-out occurred on the entire back side.

### Practical water resistance test

100 ml of water at 100°C was poured in the mold, and allowed to stand at room temperature for 30 min; and thereafter, the degree of stain on the mold was evaluated. According to the degree of penetration, the evaluation numerical values were set as follows.
5: There was no stain on the inside.
4: There was stain on the inside. There was no stain on the back side.
3: There was stain on the inside. There was slight oozing-out on the back side.
2: There was stain on the inside. Oozing-out to the back occurred in smaller than 50% of the area.
1: There was stain on the inside. Oozing-out to the back occurred in 50% or larger and smaller than 100% of the area.
0: Oozing-out occurred on the entire back side.

### Example 1

In a reaction container equipped with a reflux condenser and a Dean-Stark trap, a stirring bar, 2.8 g of citric acid and 13 g of octadecylamine were added, and heated to 70°C; and 20 ml of toluene was added. The resultant was heated and stirred at 135°C for 64 hours. The reaction container was cooled to room temperature; 20 ml of toluene was further added; and the resultant was cleaned with acetone and ethanol in order to obtain a modified natural product. The biobased content of the obtained modified natural product was 100%. Then, the melting point of the obtained modified natural product was evaluated; and a 14.9 mg/cm³ chloroform solution of the obtained modified natural product was fabricated, and the KIT test, the corn oil resistance, the liquid repellency and the air permeability were evaluated; and the evaluation results of these are shown in Table 1.

### Example 2

In a reaction container equipped with a reflux condenser and a dean-stark trap, a stirring bar, 1.9 g of citric acid, 11 g of stearyl alcohol and 15 ml of toluene were added, and 0.2 g of sulfuric acid was dropwise charged under stirring. The resultant was slowly heated to 140°C and heated and stirred at 140°C for 3 hours. The resultant was cooled to room temperature, and thereafter, 30 ml of chloroform was added, and heated and dissolved; thereafter, the resultant was cleaned with ethanol to obtain a modified natural product. The biobased content of the obtained modified natural product was 100%. Then, the melting point of the obtained modified natural product was evaluated; and a 14.9 mg/cm³ chloroform solution of the obtained modified natural product was fabricated, and the KIT test, the corn oil resistance, the liquid repellency and the air permeability were evaluated; and the evaluation results of these are shown in Table 1.

### Comparative Example 1

By using a cellulose (20 µm, powder) as the oil-resistant agent, the KIT test, the corn oil resistance, the liquid repellency and the air permeability were evaluated. The results are shown in Table 1.

**[Table 1]**

| | KIT (score) | Corn oil | Static contact angle(°) | Melting point (°C) | Air permeability (s/100cc) |
|---|---|---|---|---|---|
| Example 1 | 4 | Good | 46.5 | 100 | 231.7 |
| Example 2 | 4 | Good | 41.1 | 60 | 229.3 |
| Com. Example 1 | 0 | Poor | - | - | 255 |

### Example 3

30 mg of the modified natural product obtained in Example 1, 30 mg of sodium oleate and 0.3 g of water were added and heated at 100°C; thereafter, hot water was added so that the concentration of the modified natural product became 1 wt.%, and the resultant was dispersed under heating at 90°C by an ultrasonic homogenizer to fabricate a dispersion. By using this dispersion, the KIT test, the corn oil resistance and the air permeability were evaluated. The results are shown in Table 2.

**[Table 2]**

| | KIT (score) | Corn oil | Air permeability (s/100cc) |
|---|---|---|---|
| Example 3 | 5 | Good | 632.5 |
| Com. Example 1 | 0 | Poor | 255 |

### Example 4

500 mg of the modified natural product obtained in Example 1 and 500 mg of an emulsifier (polyoxyethylene oleyl ether) were added and heated at 110°C; thereafter, hot water was added so that the concentration of the modified natural product became 1 wt.%, and the resultant was dispersed under heating at 90°C by a mechanical shearing homogenizer to obtain a dispersion.

### Example 5

The same operation as in the method described in Example 4 was carried out, except for altering the emulsifier to sodium oleate to obtain a dispersion.

### Examples 6 to 9

In each Example thereof, to 700 g of a 1.4 wt.% water dispersion of a mixture of 70 parts of a broad-leaved tree bleached kraft pulp and 30 parts of a needle-leaved tree bleached kraft pulp, which had been beaten to a freeness of 550 cc (Canadian freeness), 1,300 ml of water was added. The water dispersion of the modified natural product obtained in Example 4 or 5 was added, under stirring, in a solid content concentration of the modified natural product per pulp weight as described in Table 3, to prepare a pulp slurry.

### Mold molding

Each pulp slurry of Examples 6 to 9 was charged in an automatic mold tester, and pressed at a pressure of 0.3 MPa, at a temperature of 80°C for 10 s, and thereafter pressed at a pressure of 0.3 MPa, at a temperature of 180°C for 60 s to fabricate a pulp mold of about 10 g in weight. The obtained pulp mold was subjected to the practical oil resistance test and the practical water resistance test. The results are shown in Table 3.

### Comparative Example 2

To 700 g of a 1.4 wt.% water dispersion of a mixture of 70 parts of a broad-leaved tree bleached kraft pulp and 30 parts of a needle-leaved tree bleached kraft pulp, which had been beaten to a freeness of 550 cc (Canadian freeness), 1,300 ml of water was added to prepare a pulp slurry; the pulp slurry was charged in an automatic mold tester, and pressed at a pressure of 0.3 MPa, at a temperature of 80°C for 10 s, and thereafter pressed at a pressure of 0.3 MPa, at a temperature of 180°C for 60 s to fabricate a pulp mold of about 10 g in weight. The obtained pulp mold was subjected to the practical oil resistance test and the practical water resistance test. The results are shown in Table 3.

**[Table 3]**

| | Modified natural product-containing water dispersion | Modified natural product solid content concentration ( wt.%) | Practical oil resistance test | Practical water resistance test |
|---|---|---|---|---|
| Example 6 | Example 4 | 10 | 4 | 4 |
| Example 7 | Example 4 | 5 | 4 | - |
| Example 8 | Example 4 | 2.5 | 2 | - |
| Example 9 | Example 5 | 10 | 4 | - |
| Com. Ex. 2 | - | - | 0 | 0 |

### Example 10

100 mg of the modified natural product obtained in Example 1, 10 mg of a polyoxyethylene trimethylnonyl ether and 300 mg of isopropyl alcohol were added, and heated at 85°C, and the modified natural product was thereby dissolved. Hot water was added thereto so that the concentration of the modified natural product became 1 wt.%, and thereafter, the resultant was three times crushed at 245 MPa by a Star Burst Mini (model No. HJP-25001), manufactured by Sugino Machine Ltd., to obtain a dispersion.

### Examples 11 to 15

The same operation as in the method described in Example 10 was carried out, except for altering the polyoxyethylene trimethylnonyl ether to an emulsifier or dispersant described in Table 4, to obtain a dispersion.

**[Table 4]**

| | Emulsifier (Dispersant) |
|---|---|
| Example 10 | polyoxyethylene trimethylnonyl ether |
| Example 11 | polyoxyethylene polyoxybutylene alkyl ether |
| Example 12 | polyoxyethylene polyoxypropylene alkyl ether |
| Example 13 | polyoxyethylene butyl ether |
| Example 14 | polyoxyethylene polyoxypropylene 2-ethylhexyl ether |
| Example 15 | polyoxyethylene polyoxypropylene glycol |

### Examples 16 to 18

The same operation as in the method described in Examples 10 to 15 was carried out, except for altering the concentration of the modified natural product to 10 wt.%, the number of times of the crushing to one time and the emulsifier or dispersant to one described in Table 5, to obtain a dispersion. The dispersibility was improved compared to the cases wherein the concentration of the modified natural product is 1 wt%.

### Mold molding

In each Example thereof, to 700 g of a 1.4 wt.% water dispersion of a mixture of 70 parts of a broad-leaved tree bleached kraft pulp and 30 parts of a needle-leaved tree bleached kraft pulp, which had been beaten to a freeness of 550 cc (Canadian freeness), 1,300 ml of water was added. The corresponding water dispersion of the modified natural product obtained in Examples 16 to 18 was added, under stirring, so that the solid content concentration per pulp weight of the modified natural product became 2.5%, to prepare a pulp slurry. The pulp slurry was charged in an automatic mold tester, and pressed at a pressure of 0.3 MPa, at a temperature of 80°C for 10 s, and thereafter pressed at a pressure of 0.3 MPa, at a temperature of 180°C for 60 s to fabricate a pulp mold of about 10 g in weight. The obtained pulp mold was subjected to the practical oil resistance test. The results are shown in Table 5.

**[Table 5]**

| | Emulsifier (Dispersant) | Practical oil resistance test Bottom (score) | Practical oil resistance test Side surface (score) |
|---|---|---|---|
| Ex. 16 | polyoxyethylene glycol trimethylnonyl ether | 2 | 1 |
| Ex. 17 | polyoxyethylene polyoxybutylene alkyl ether | 3 | 2 |
| Ex. 18 | polyoxyethylene polyoxypropylene alkyl ether | 2 | 1 |

### Example 19

An emulsifier aqueous solution (dispersion) was prepared by adding 17.8 g of water to 200 mg of an emulsifier A (a polyoxyethylene polyoxypropylene alkyl ether), and thereafter 2 g of the modified natural product obtained in Example 1 was added and stirred, and three times crushed at 245 MPa by the STAR Burst Mini to obtain a dispersion.

### Example 20

An emulsifier aqueous solution (dispersion) was prepared by adding 17.8 g of water to 10 mg of the emulsifier A (a polyoxyethylene polyoxypropylene alkyl ether) and 53 mg of an emulsifier B (a hydroxyethylalkylmethylammonium chloride), and thereafter 2 g of the modified natural product obtained in Example 1 was added and stirred, and three times crushed at 245 MPa by the STAR Burst Mini to obtain a dispersion.

### Examples 21 to 28

In each Example thereof, the same operation as in the method described in Example 20 was carried out, except for altering the emulsifier B and the additive to those described in Table 6, to obtain a dispersion.

### Mold molding

To 700 g of a 1.4 wt.% water dispersion of a mixture of 70 parts of a broad-leaved tree bleached kraft pulp and 30 parts of a needle-leaved tree bleached kraft pulp, which had been beaten to a freeness of 550 cc (Canadian freeness), 1,300 ml of water was added. The water dispersion of the modified natural product obtained in Examples 21 to 28 was added, under stirring, so that the solid content concentration per pulp weight of the modified natural product became 2.5%, to prepare a pulp slurry. The pulp slurry was charged in an automatic mold tester, and pressed at a pressure of 0.3 MPa, at a temperature of 80°C for 10 s, and thereafter pressed at a pressure of 0.3 MPa, at a temperature of 180°C for 60 s to fabricate a pulp mold of about 10 g in weight. The obtained pulp mold was subjected to the practical oil resistance test. The results are shown in Table 6.

**[Table 6]**

| | Emulsifier (Dispersant) A (mg) | Emulsifier (Dispersant) B | Emulsifier (Dispersant) B (mg) | Additive | Additive amount | Practical oil resistance test | Practical oil resistance test |
|---|---|---|---|---|---|---|---|
| Ex. 19 | 200 | | | | | 2 | 1 |
| Ex. 20 | 10 | bishydroxyethyl alkylmethylammonium chloride | 53 | | | 2.5 | 2 |
| Ex. 21 | 10 | di(polyoxyethylene) oleylmethylammonium chloride | 53 | | | 2.5 | 1.5 |
| Ex. 22 | 10 | polyethyleneimine | 40 | | | 2 | 2 |
| Ex. 23 | 10 | polyethyleneimine ethoxylate | 50 | | | 2.5 | 2 |
| Ex. 24 | 10 | laurylmethylbenzyl ammonium chloride | 80 | | | 3.5 | 2.5 |
| Ex. 25 | 10 | dodecyltrimethyl ammonium chloride | 133 | | | 3 | 2.5 |
| Ex. 26 | 10 | coconut amine acetate | 40 | | | 3 | 2 |
| Ex. 27 | 10 | bishydroxyethyl alkylmethylammonium chloride | 53 | acetic acid | one droplet | 3 | 2.5 |
| Ex. 28 | 10 | bishydroxyethyl alkylmethylammonium chloride | 53 | citric acid | 2 mg | 4 | 2.5 |

### Example 29

3.24 g of dimethyl 3-hydroxyglutarate was dissolved in 20.0 mL of dehydrated toluene, and thereafter, 2.91 g of stearylamine was added, and stirred over night at an oil bath temperature of 132°C. The next day, the resultant was cooled to room temperature, and 30 mL of methanol was added, and the reaction solution was filtered. An obtained solid was dried to obtain 2.75 g of a compound A. 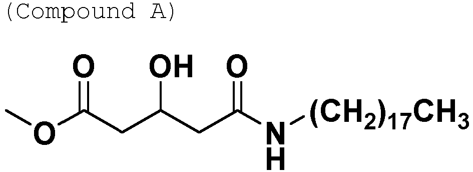 ¹H NMR (CDCl₃, 400 MHz) δ: 0.87 (t, 3 H), 1.10-1.50 (m, 32 H), 2.30-2,42 (m, 2 H), 2.45-2.54 (m, 2 H), 3.20-3.24 (m, 2 H), 3.73 (s, 3 H), 4.34-4.45 (m, 1 H), 5.99 (br s, 1 H).

A 14.9 mg/cm³ chloroform solution of the compound A was fabricated, and the KIT test and the corn oil resistance were evaluated. The results are shown in Table 7.

### Example 30

0.15 g of D,L-malic acid was dissolved in 10.0 mL of acetyl chloride, and thereafter stirred at an oil bath temperature of 60°C for 5 hours. After 5 hours, the resultant was concentrated to dryness to obtain 0.18 g of an intermediate compound.

### (Intermediate compound)

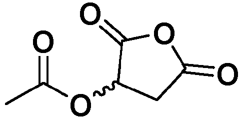

¹H NMR (CDCl₃, 400 MHz) δ: 2.21 (s, 3 H), 3.39 (dd, 1 H), 3.03 (dd, 1 H), 5.52 (dd, 1 H).

0.18 g of the intermediate compound was dissolved in 20.0 mL of dehydrated dichloromethane, and thereafter, 0.46 g of stearylamine was added, and stirred over night at an oil bath temperature of 40°C. The next day, the resultant was concentrated to dryness, thereafter suspended in 6 mL of dichloromethane, and thereafter filtered and dried to obtain 0.41 g of a compound B. 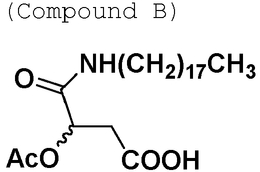 wherein Ac is an acetyl group.

¹H NMR (CDCl₃, 400 MHz) δ: 0.87 (t, 3 H), 1.10-1.50 (m, 32 H), 2.16 (s, 3 H), 2.89-3.03 (m, 2 H), 3.20-3.30 (m, 2 H), 5.45 (t, 1 H), 6.25 (br s, 1 H).

0.41 g of the compound B was dissolved in 15.0 mL of dehydrated chloroform, and thereafter stirred for 5 min in an ice bath, and thereafter, 0.334 g of stearylamine, 11.7 mg of 4,4-dimethylaminopyridine and 0.22 g of a 1-ethyl-3-(3-dimethylaminopropyl)carbodiimide hydrochloric acid salt were added in order. The reaction solution was stirred overnight, and thereafter concentrated to dryness. Then, the residue was cleaned with 20 mL of water and 20 mL of methanol in order, and thereafter filtered and dried to obtain 0.43 g of a compound C. 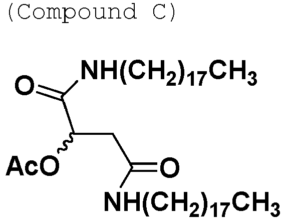 wherein Ac is an acetyl group.

¹H NMR (CDCl₃, 400 MHz) δ: 0.87 (t, 3 H), 1.10-1.50 (m, 64 H), 2.13 (s, 3 H), 2.70-2.83 (m, 2 H), 3.10-3.27 (m, 4 H), 5.42 (br s, 1 H).

A 14.9 mg/cm³ chloroform solution of the compound C was fabricated, and the KIT test and the corn oil resistance were evaluated. The results are shown in Table 7.

### Example 31

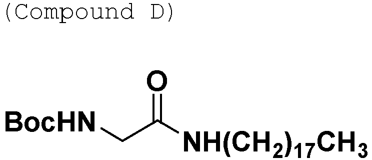

wherein Boc is a t-butoxycarbonyl group.

A 14.9 mg/cm³ chloroform solution of the compound D was fabricated, and the KIT test and the corn oil resistance were evaluated. The results are shown in Table 7.

**[Table 7]**

| | KIT (score) | Corn oil |
|---|---|---|
| Example 29 | 4 | Good |
| Example 30 | 4 | Good |
| Example 31 | 4 | Good |

### Industrial Applicability

The modified natural product of a biobased compound of the present disclosure can be used as an oil-resistant agent, and can further be used as a water-resistant agent, a water repellent, an oil repellent, a soil resistant agent, a soil release agent, a release agent or a mold release agent. The modified natural product is suitably used in applications requiring the oil resistance, in particular, in food applications such as food packaging materials and food containers.

## Claims

1. An agent, which is an oil-resistant agent, comprising a modified natural product (i) having a biobased content, measured according to ASTM D6866, of ≥ 30% and (ii) wherein
- a hydroxyl group of a carboxyl group of a biobased compound having at least one carboxyl group is replaced by -X-R¹ or -X-D-X'-R¹, or
- a carboxyl group of the biobased compound is replaced by 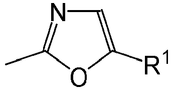 wherein
X is a direct bond, -O-, -NR¹¹- or -S-;
R¹ is a C₁₂₋₄₀-hydrocarbon group optionally having a substituent selected from OH, carboxyl, alkoxy ester, alkoxy, amino, amine salts, and (Rc)₃Si and (RcO)₃Si wherein Rc each independently is H or C₁₋₄-alkyl;
D is C₁₋₁₀-alkylene; and
X' is -C(=O)-O-, -O-C(=O)-, -C(=O)-NR¹²- or -NR¹²-C(=O)-, wherein R¹¹ and R¹² are each H or C₁₋₄₀-alkyl optionally having a substituent.

2. The agent of claim 1, wherein a carboxyl group of the modified natural product has a structure of a salt.

3. The agent of claim 1 or 2, wherein the biobased compound has a hydroxyl group.

4. The agent of any of claims 1-3, wherein hydrogen of a hydroxyl group of the biobased compound is replaced by -Y-R²¹ (Rb) wherein Y is a direct bond, -C(=O)-, -C=S-, or -C(=O)-NR²²- wherein R²² is H or a C₁₋₂₂-hydrocarbon group optionally having a substituent; and R²¹ is a C₁₋₄₀-hydrocarbon group optionally having a substituent, or a polysiloxane.

5. The agent of any of claims 1-4, wherein the biobased compound is at least one selected from citric acid, malic acid, gluconic acid, alginic acid, butyric acid, lactic acid, tartaric acid, oxalic acid, malonic acid, succinic acid, fumaric acid, maleic acid, chlorogenic acid, aldonic acid, uronic acid, aldaric acid and derivatives thereof.

6. The agent of any of claims 1-5, wherein the biobased compound is a compound of the formula: 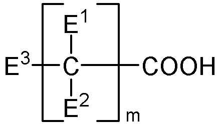 wherein E¹ each independently is H or -COOH; E² each independently is H or -OH; E³ is -COOE⁴ (wherein E⁴ is H or C₁₋₂₂-alkyl), -CH₃, -NH₂ or -OH; and m is a number of 0-10.

7. The agent of any of claims 1-6, wherein the biobased compound has two or more carboxyl groups.

8. The agent of any of claims 1-7, wherein R¹ is an aliphatic hydrocarbon group optionally having a substituent.

9. The agent of any of claims 1-8, which is a water dispersion composition.

10. The agent of any of claims 1-9, which comprises an emulsifier or a dispersant, preferably a cationic, nonionic and/or anionic emulsifier or dispersant.

11. The agent of any of claims 1-10, which comprises at least one selected from retention aids, sizing agents, pH adjusters, fillers and paper strength additives.

12. The agent of any of claims 1-11, which has a melting point of ≥ 25°C and/or has a HD contact angle of ≥ 10°.

13. The use of the agent of any of claims 1-12 for paper.

14. An article comprising the agent of any of claims 1-12, the article being a textile product, an oil-resistant paper, a food packaging material or a food container.

15. A method of treating paper, comprising subjecting the paper to an external addition treatment or an internal addition treatment using the agent of any of claims 1-12.

## Patentansprüche

1. Mittel, das ein ölbeständiges Mittel ist, umfassend ein modifiziertes Naturprodukt (i) mit einem biobasierten Gehalt, gemessen nach ASTM D6866, von ≥ 30% und (ii) worin
- eine Hydroxylgruppe einer Carboxylgruppe einer biobasierten Verbindung mit mindestens einer Carboxylgruppe durch -X-R¹ oder -X-D-X'-R¹ ersetzt ist, oder
- eine Carboxylgruppe der biobasierten Verbindung ersetzt ist durch 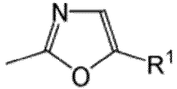 worin
X eine direkte Bindung, -O-, -NR¹¹- oder -S- ist;
R¹ eine C₁₂₋₄₀-Kohlenwasserstoffgruppe ist, die optional einen Substituenten ausgewählt aus OH, Carboxyl, Alkoxyester, Alkoxy, Amino, Aminsalzen und (Rc)₃Si und (RcO)₃Si aufweist, wobei Rc jeweils unabhängig H oder C₁₋₄-Alkyl ist;
D C₁₋₁₀-Alkylen ist; und
X' -C(=O)-O-, -O-C(=O)-, -C(=O)-NR¹²- oder -NR¹²-C(=O)- ist, worin R¹¹ und R¹² jeweils H oder C₁₋₄₀-Alkyl, das optional einen Substituenten aufweist, sind.

2. Mittel nach Anspruch 1, wobei eine Carboxylgruppe des modifizierten Naturprodukts die Struktur eines Salzes aufweist.

3. Mittel nach Anspruch 1 oder 2, wobei die biobasierte Verbindung eine Hydroxylgruppe aufweist.

4. Mittel nach mindestens einem der Ansprüche 1-3, wobei Wasserstoff einer Hydroxylgruppe der biobasierten Verbindung durch -Y-R²¹ (Rb) ersetzt ist, worin Y eine direkte Bindung, -C(=O)-, -C=S- oder -C(=O)-NR²²- ist, worin R²² H oder eine C₁₋₂₂-Kohlenwasserstoffgruppe, die optional einen Substituenten aufweist, ist; und R²¹ eine C₁₋₄₀-Kohlenwasserstoffgruppe, die optional einen Substituenten aufweist, oder ein Polysiloxan ist.

5. Mittel nach mindestens einem der Ansprüche 1-4, wobei die biobasierte Verbindung mindestens eine ist, ausgewählt aus Zitronensäure, Äpfelsäure, Gluconsäure, Alginsäure, Buttersäure, Milchsäure, Weinsäure, Oxalsäure, Malonsäure, Bernsteinsäure, Fumarsäure, Maleinsäure, Chlorogensäure, Aldonsäure, Uronsäure, Aldarsäure und Derivaten davon.

6. Mittel nach mindestens einem der Ansprüche 1-5, wobei die biobasierte Verbindung eine Verbindung der Formel ist: 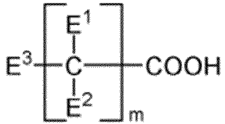 worin E¹ jeweils unabhängig H oder -COOH ist; E² jeweils unabhängig H oder -OH ist; E³ -COOE⁴ (worin E⁴ H oder C₁₋₂₂-Alkyl ist), -CH₃, -NH₂ oder -OH ist; und m eine Zahl von 0-10 ist.

7. Mittel nach mindestens einem der Ansprüche 1-6, wobei die biobasierte Verbindung zwei oder mehr Carboxylgruppen aufweist.

8. Mittel nach mindestens einem der Ansprüche 1-7, wobei R¹ eine aliphatische Kohlenwasserstoffgruppe, die optional einen Substituenten aufweist, ist.

9. Mittel nach mindestens einem der Ansprüche 1-8, das eine Wasserdispersionszusammensetzung ist.

10. Mittel nach mindestens einem der Ansprüche 1-9, das einen Emulgator oder ein Dispergiermittel, vorzugsweise einen kationischen, nichtionischen und/oder anionischen Emulgator oder ein Dispergiermittel, umfasst.

11. Mittel nach mindestens einem der Ansprüche 1-10, das mindestens eines ausgewählt aus Retentionsmitteln, Leimungsmitteln, pH-Einstellern, Füllstoffen und Papierfestigkeitsadditiven umfasst.

12. Mittel nach mindestens einem der Ansprüche 1-11, das einen Schmelzpunkt von ≥ 25°C und/oder einen HD-Kontaktwinkel von ≥ 10° aufweist.

13. Verwendung des Mittels nach mindestens einem der Ansprüche 1-12 für Papier.

14. Gegenstand, der das Mittel nach mindestens einem der Ansprüche 1-12 umfasst, wobei der Gegenstand ein Textilprodukt, ein ölbeständiges Papier, ein Lebensmittelverpackungsmaterial oder ein Lebensmittelbehälter ist.

15. Verfahren zur Behandlung von Papier, umfassend das Unterziehen des Papiers einer externen Additionsbehandlung oder einer internen Additionsbehandlung unter Verwendung des Mittels nach mindestens einem der Ansprüche 1-12.

## Revendications

1. Agent, qui est un agent résistant à l'huile, comprenant un produit naturel modifié (i) ayant un composé biosourcé, mesuré selon la norme ASTM D6866, qui est ≥ 30% et (ii) dans lequel
- un groupe hydroxyle d'un groupe carboxyle d'un composé biosourcé ayant au moins un groupe carboxyle est remplacé par -X-R¹ ou -X-D-X¹-R¹, ou
- un groupe carboxyle du composé biosourcé est remplacé par 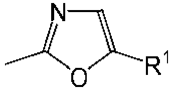 dans lequel
X est une liaison directe, -O-, -NR¹¹- ou -S- ;
R¹ est un groupe d'hydrocarbures en C₁₂₋₄₀ ayant facultativement un substituant choisi parmi OH, carboxyle, alcoxy ester, alcoxy, amino, sels d'amine, et (Rc)₃Si et (RcO)₃Si dans lequel Rc est à chaque fois de manière indépendante H ou alkyle en C₁₋₄ ;
D est alcylène en C₁₋₁₀ ; et
X' est -C(=O)-O-, -O-C(=O)-, -C (=O)-NR¹²- ou -NR¹²-C(=O)-, dans lequel R¹¹ et R¹² sont chacun H ou alkyle en C₁₋₄₀ ayant facultativement un substituant.

2. Agent selon la revendication 1, dans lequel un groupe carboxyle du produit naturel modifié a une structure d'un sel.

3. Agent selon la revendication 1 ou la revendication 2, dans lequel le composé biosourcé a un groupe hydroxyle.

4. Agent selon l'une quelconque des revendications 1 à 3, dans lequel l'hydrogène d'un groupe hydroxyle du composé biosourcé est remplacé par -Y-R²¹ (Rb) dans lequel Y est une liaison directe, -C(=O)-, -C=S-, ou -C(=O)-NR²²- dans lequel R²² est H ou un groupe d'hydrocarbures en C₁₋₂₂ ayant facultativement un substituant ; et R²¹ est un groupe d'hydrocarbures en C₁₋₄₀ ayant facultativement un substituant, ou un polysiloxane.

5. Agent selon l'une quelconque des revendications 1 à 4, dans lequel le composé biosourcé est au moins un composé choisi parmi l'acide citrique, l'acide malique, l'acide gluconique, l'acide alginique, l'acide butyrique, l'acide lactique, l'acide tartrique, l'acide oxalique, l'acide malonique, l'acide succinique, l'acide fumarique, l'acide maléique, l'acide chlorogénique, l'acide aldonique, l'acide uronique, l'acide aldarique et des dérivés de ceux-ci.

6. Agent selon l'une quelconque des revendications 1 à 5, dans lequel le composé biosourcé est un composé représenté par la formule : 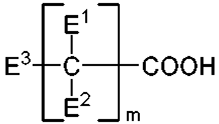 dans lequel E¹ est à chaque fois de manière indépendante H ou -COOH ; E² est à chaque fois de manière indépendante H ou -OH ; E³ est -COOE⁴ (dans lequel E⁴ est H ou alkyle en C₁₋₂₂), -CH₃, -NH₂ ou -OH ; et m est un nombre de 0 à 10.

7. Agent selon l'une quelconque des revendications 1 à 6, dans lequel le composé biosourcé a deux ou plusieurs groupes carboxyles.

8. Agent selon l'une quelconque des revendications 1 à 7, dans lequel R¹ est un groupe d'hydrocarbures aliphatiques ayant facultativement un substituant.

9. Agent selon l'une quelconque des revendications 1 à 8, qui est une composition de dispersion aqueuse.

10. Agent selon l'une quelconque des revendications 1 à 9, qui comprend un émulsifiant ou un dispersant, de préférence un émulsifiant ou dispersant cationique, non ionique et/ou anionique.

11. Agent selon l'une quelconque des revendications 1 à 10, qui comprend au moins un élément choisi parmi des auxiliaires de rétention, des agents d'encollage, des ajusteurs de **pH, des** charges et des additifs de résistance du papier.

12. Agent selon l'une quelconque des revendications 1 à 11, qui a un point de fusion ≥ 25°C et/ou a un angle de contact HD ≥ 10°.

13. Utilisation de l'agent selon l'une quelconque des revendications 1 à 12 pour le papier.

14. Article comprenant l'agent selon l'une quelconque des revendications 1 à 12, l'article étant un produit textile, un papier résistant à l'huile, un matériau d'emballage alimentaire ou un contenant alimentaire.

15. Procédé destiné à traiter du papier, comprenant la soumission du papier à un traitement d'addition externe ou un traitement d'addition interne en utilisant l'agent selon l'une quelconque des revendications 1 à 12.
